# EUROPÄISCHE PATENTSCHRIFT

(11) **EP 1 155 363 B1**
(45) Veröffentlichungstag und Bekanntmachung des Hinweises auf die Patenterteilung: **31.07.2002**
(21) Anmeldenummer: 00906330.6
(22) Anmeldetag: 15.02.2000
(51) Int. Cl.: G06F 3/12

(54) **DRUCKSYSTEM**
PRINTING SYSTEM
SYSTEME D'IMPRESSION

(30) Priorität: 15.02.1999 DE 19906187
(43) Veröffentlichungstag der Anmeldung: 21.11.2001
(73) Patentinhaber: OC Printing Systems GmbH, 85586 Poing (DE)
(72) Erfinder: SCHWIER, Hartwig, D-81675 München (DE); SIEMENS, Rüdiger, D-81825 München (DE)
(74) Vertreter: Schaumburg, Thoenes & Thurn
(86) Internationale Anmeldenummer: EP0001227
(87) Internationale Veröffentlichungsnummer: WO0049489

(56) Entgegenhaltungen:
- EP-A- 0 782 068
- EP-A- 0 886 206

## Beschreibung

Die Erfindung betrifft ein Drucksystem mit mehreren, als selbständige Baueinheit ausgebildeten Druckgeräten, die jeweils unterschiedliche Eigenschaften haben.

In Druckzentren, welche vorwiegend mit elektrofotografischen Hochleistungsdruckern, deren Druckleistung 40 Seiten pro Minute oder mehr beträgt, war es über lange Zeit nur möglich, Ausdrucke einer einzigen Farbe (monochrom) zu erzeugen. In diesem Bereich werden nunmehr immer häufiger Ausdrucke in mehreren Farben erzeugt. Elektrofotografische Hochleistungsgeräte sind heutzutage ohne weiteres in der Lage, in zwei Farben zu drucken, d.h. in einem sog. Spot-Color-Betrieb oder Highlight-Color-Betrieb. Ein derartiger Drucker ist beispielsweise von der Océ Printing Systems GmbH unter der Bezeichnung PAGESTREAM® 200DSC bekannt.

In Druckzentren werden mitunter mehrere Geräte, z.B. Geräte zur Vorverarbeitung und zur Nachverarbeitung mit einem Druckgerät, zu einem Drucksystem gekoppelt. Bei Druckaufträgen, beispielsweise beim Erstellen von Broschüren oder Büchern in geringen oder mittleren Auflagen zwischen einem und einigen tausend Exemplaren, kommt es häufig vor, daß innerhalb eines Druckauftrags eine Vielzahl von schwarz-weißen Folgeblättern zu drucken ist und einige wenige, farblich gestaltete Blätter zu drucken sind. Die Farbgestaltung kann dabei von zwei Farben bis hin zu Vollfarbenbildern variieren.

Um derartige Druckaufträge performance-angepaßt, d.h. angepaßt an die jeweiligen Eigenschaften und Druckgeschwindigkeiten der beteiligten Druckgeräte durchführen zu können, wurde in der WO-A1-99/09459 (PCT/EP98/05111) vorgeschlagen, Druckgeräte mit verschiedenen Farbeigenschaften zu einem Drucksystem zu koppeln und die von den verschiedenen Druckgeräten erstellten Blattfolgen in einer gemeinsamen Blattsammeleinrichtung in einer vorgegebenen Reihenfolge zu sammeln.

Aus der US 5,574,831 A ist ein weiteres Drucksystem bekannt, bei dem mehrere Druckgeräte, deren Druckgeschwindigkeit relativ langsam ist, zu einem Drucksystem kombiniert werden, welches eine höhere Druckgeschwindigkeit als die einzelnen Druckgeräte aufweist. Die einzelnen Druckgeräte dieses Drucksystems sind untereinander im wesentlichen gleichartig aufgebaut. Das Drucksystem führt den einzelnen Druckern Druckdaten des Druckauftrags im wesentlichen zeitlich parallel zu. Dies trägt zur Erhöhung der Druckgeschwindigkeit bei. Aus der US 5,596,416 A ist ein ähnliches Drucksystem bekannt, bei dem mehrere Druckwerke in einem gemeinsamen Gehäuse untergebracht sind. Ankommende Druckdaten werden dabei geräteintern den jeweiligen Druckwerken zugewiesen und die von den verschiedenen Druckwerken erzeugten Seiten in einer gemeinsamen Ausgabeeinheit zusammengeführt.

Aus der EP 651 318 A2 ist ein Drucksystem mit einem Druckgerät bekannt, dessen Steuerung in der Lage ist, mit einer Steuerung eines Nachverarbeitungsgerätes, beispielsweise eines Druckgeräts, der in anderer Farbe in die bereits vom ersten Druckgerät bedruckten Dokumente hineindruckt, verbindbar ist. Sowohl die zu druckenden Daten als auch Steuerungsdaten werden dabei stets über die Steuerung des ersten, sog. intelligenten Druckgeräts, verarbeitet. Dies führt zu einem relativ hohen Datendurchsatz in dem ersten Druckgerät.

Ein weiteres Drucksystem, bei dem Druckdaten auf mehrere Geräte verteilt werden, ist aus der EP 790 548 A1 bekannt. Auch bei diesem Drucksystem werden die Druckdaten über die Steuerung eines Druckgerätes geführt. Nachteilig bei dieser Lösung ist ebenfalls, daß die Steuerung des Druckgerätes so intelligent sein muß, daß sie auch Steuerungs- bzw. Druckdaten für nachgeschaltete Druckeinrichtungen interpretieren kann.

Aus dem Palladium™ Design Document, welches zu dem Palladium Print System in Zusammenarbeit zwischen dem MIT / Project Athena unter Beteiligung der Firmen Digital Equipment Corp., International Business Machines und Hewlett Packard als Referenz-Implementation für die OSI Document Processing Architecture zu den Standards ISO/IEC 10175 vorgeschlagen wurde, ist ein offenes Drucksystem für Tischdrucker bekannt.

Im Druckerbuch der Océ Printing Systems GmbH, ISBN 3-00-001019-X, Ausgabe 3c, Mai1998, ist auf den Seiten 14-2 bis 14-12 das Druck-Produktionskontrollsystem Océ Domain® beschrieben. Bei diesem System werden ein oder mehrere Drukker mit Vor- und Nachverarbeitungsgeräten verbunden. Das System steuert und überwacht die Druckproduktion.

In DE-A1-44 22 619 ist ein Drucksystem beschrieben, bei dem Druckdaten von einem Verwaltungsserver auf verschiedene Drucker aufgeteilt werden können. Aus der EP-A1-806 721 ist ein Drucksystem bekannt, bei dem verschiedenartige Druckseiten eines Druckdatenstroms auf verschiedenartigen Druckern (A3, A4, farbig etc.) ausgegeben werden können.

Aus der EP-A-0 782 068 und aus der EP-A-0 886 206 sind jeweils Drucksysteme bekannt, bei denen mindestens ein Druckgerät an ein Netzwerk angeschlossen ist.

Aufgabe der vorliegenden Erfindung ist es, ein offenes Drucksystem zu ermöglichen, mit dem selbständige Druckgeräte unterschiedlicher Bauart flexibel zusammenwirken können. Die Erfindung ist definiert in Anspruch 1.

Gemäß der Erfindung werden mindestens zwei alleinstehende Druckgeräte verschiedener Bauart mit einem Druckserver verbunden, der Druckdaten von einer Druckdatenquelle wie einem Host-Computer oder einem Computer-Netz, an dem verschiedene Clients angebunden sind, empfängt, und der die Druckdaten eines Druckauftrages (jobs) zunächst in Datengruppen unterteilt. Für die Unterteilung werden jobspezifische Informationen ausgewertet wie der Umfang des Auftrags, die Auflagengröße, die benötigte Druckauflösung, die Wiedergabe von Farbinformationen usw. Die Daten einer Datengruppe werden dann gruppenspezifisch zu einem der jeweiligen Gruppe zugeordneten, d.h. passenden Druckgerät übertragen. Für jedes Druckgerät wird somit eine entsprechende Druckschlange (queue) gebildet. Zur geräteübergreifenden Prozeßsteuerung des Druckauftrages werden Statusinformationen der eigenständigen Druckgeräte erfaßt und ausgewertet. Diese Auswertung kann insbesondere im Druckserver erfolgen. Die gruppenspezifische Zuordnung bzw. Aufteilung der Daten an die entsprechenden Druckgeräte kann insbesondere performance-angepaßt erfolgen, d.h. angepaßt an die jeweilige Geschwindigkeit und/oder Druckeigenschaft des Druckgeräts. Sie kann beispielsweise in Abhängigkeit von Parametern des Druckauftrags erfolgen, etwa nach Umfang des Druckauftrags, nach geforderter Qualität, z.B. Druckbildauflösung und insbesondere in Abhängigkeit der zu druckenden Farben wie Schwarz-Weiß, Highlight-Color, Spot-Color oder Vollfarbe.

Der Druckserver nimmt somit einerseits die gezielte Weiterleitung ausgewählter Datengruppen von der Druckdatenquelle (Host, LAN) an die jeweils geeigneten Druckgeräten vor, und andererseits die Steuerung des geräteübergreifenden Prozesses zur Verarbeitung des Druckauftrags. In diesem Gesamtprozeß des Druckauftrags können zusätzlich zu den Druckgeräten auch Vorverarbeitungsgeräte wie Abroller, Blattzuführer oder auch Nachverarbeitungsgeräte wie Schneidegeräte, Klebebinder, Spiralbinder, Kuvertierungsgeräte, Frankiergeräte usw. als Bestandteil des Drucksystems integriert sein. Entsprechende Steuerungsdaten können bereits im Druckauftrag hinterlegt sein, beispielsweise, daß in einem ersten Druckauftrag mit einer Auflage von 200 Exemplaren eine Klebebindung erfoderlich ist und in einem nachfolgenden zweiten Druckauftrag eine Spiralbindung mit 100 Exemplaren. Der Druckserver steuert dementsprechend einerseits die geeigneten, mit den entsprechenden Bindeeinrichtungen verbundenen Druckgeräte an und leitet diesen Druckgeräten die Druckdaten zu. Andererseits steuert der Druckserver die entsprechenden Bindeeinrichtungen.

Mit der Erfindung wird ein geregeltes System geschaffen, bei dem Druckdaten und/oder Statusinformationen zwischen dem Druckserver und den mit ihm verbundenen Geräten (Druckgeräte, Vor-, und/oder Nachverarbeitungsgeräte) bidirektional ausgetauscht werden. Der Druckserver wirkt damit nicht nur als Sammelstelle für Druckdaten (Spooler) sondern auch als geräteübergreifende Systemsteuerung.

In einer Ausführungsform der Erfindung wird eine geräteunabhängige Platform geschaffen, Die Druckdaten und/oder die Statusinformationen aller angeschlossenen Geräte werden dabei in einem universellen Datenformat verarbeitet, welches für alle Geräte, für ihre ggf. zugeordneten Hilfscomputer und für den Druckserver lesbar ist. In dieses Datenformat können zusätzlich zu Druckgeräten verschiedener Bauart vorteilhaft die Vor- und Nachverarbeitungsgeräte des Drucksystems einbezogen werden.

In einer anderen Ausführungsform der Erfindung werden Statusinformationen mehrerer, an einen Druckserver angeschlossenen Geräte im Druckserver erfaßt und von diesem ausgewertet. Der Druckserver führt dabei eine seitengenaue und geräteübergreifende Druckproduktionskontrolle mit Fehlerverfolgung (error recovery) durch. In die Fehlerverfolgung kann insbesondere das Druckgut einbezogen sein, indem jede bedruckte Seite in den Druckgeräten und/oder in den Nachverarbeitungsgeräten erfaßt wird und auf korrekten Lauf überprüft wird. Hierzu dienen insbesondere Meßmittel, mit denen das Drucken in den Druckgeräten und/oder deren Weiterverarbeitung seitengenau überwacht werden können.

In einer weiteren vorteilhaften Ausführungsform der Erfindung, der geräteübergreifenden Prozeßsteuerung, werden die Statusinformationen der angeschlossenen Geräte seitenweise vom Druckserver erfaßt und untereinander abgeglichen. Dadurch ist es möglich, bei einer Störung in einem der angeschlossenen Geräte sofort den gesamten Druckprozeß anzuhalten. Der Druckprozeß kann dann nach Beseitigung der Störung in dem einen Gerät seitengenau in allen anderen Geräten neu aufgesetzt bzw. weitergeführt werden. Hierdurch können größere Mengen Makulatur vermieden werden.

Durch die zentrale Verbindung der verschiedenen, angeschlossenen Geräte in dem zentralen Druckserver kann über eine einheitliche Schnittstelle (abstraction layer) ein lose gekoppeltes, flexibles Drucksystem aus verschiedenen, als einzelne Baueinheiten ausgebildeten Geräten geschaffen werden.

Der zentrale Druckserver ermöglicht es ebenfalls, als zentrales Schaltpult über entsprechende Steuerungsprogramme zur Ansteuerung der angeschlossenen Geräte zu wirken. Damit ist es möglich, die verschiedenen angeschlossenen Geräte, insbesondere Druckgeräte, von zentraler Stelle aus zu konfigurieren.

Im folgenden werden Ausführungsbeispiele der Erfindung anhand mehrerer Figuren näher erläutert.

Es zeigen:
- Fig. 1: ein Drucksystem bestehend aus mehreren Druckgeräten sowie Vor- und Nachverarbeitungsgeräten und
- Fig. 2: ein Drucksystem mit Hilfscomputern, die den angeschlossenen Druckgeräten zugeordnet sind.

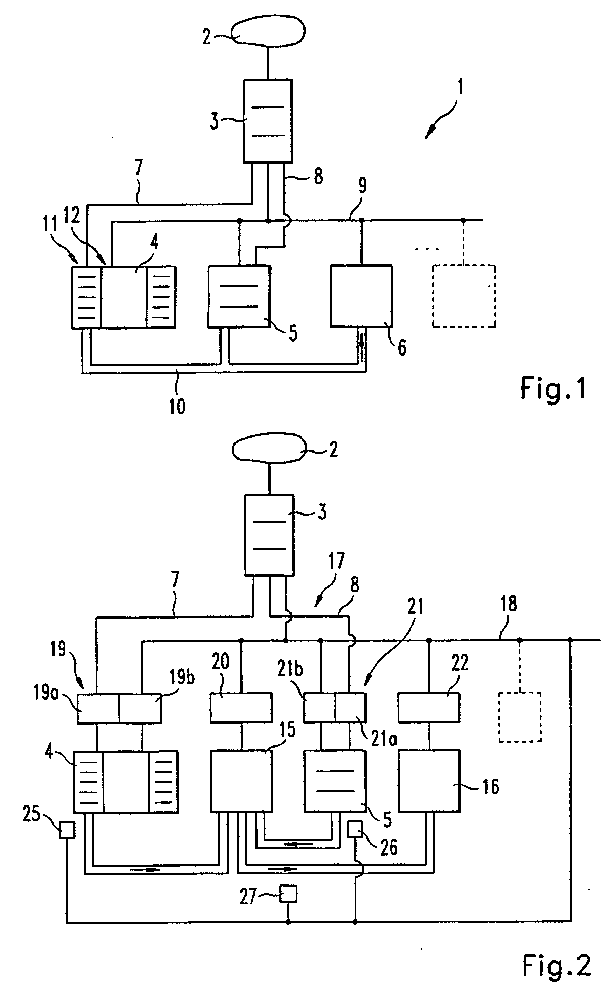

Figur 1 zeigt ein Drucksystem 1, bei dem ein zentraler Druckserver 3 mit verschiedenen Druckgeräten 4, 5 zusammenwirkt. Ein solches System entspricht weitgehend dem in der WO 99/09459 beschriebenen Drucksystem.

Der Druckserver 3 erhält von einer Druckdatenquelle 2, beispielsweise von einem Host-Computer oder von einem Computernetzwerk, beispielsweise von einem Local-Area-Network (LAN) oder über das Internet (World Wide Web) Druckdaten. Der Druckserver 3 ist in der Lage, verschiedene Druckdatenströme wie IPDS (Intelligent Print Data Stream), PCL und LCDS zu verstehen und zu interpretieren. Der Druckserver 3 untersucht diese Daten daraufhin, auf welchem der angeschlossenen Druckgeräte 4, 5 die jeweiligen Daten eines Druckauftrages (Job) performant, d. h. unter optimaler Ausnutzung der Eigenschaften der angeschlossenen Druckgeräte 4,5 erfolgen kann. Dazu hat er zum einen die wesentlichen Performance-Daten der angeschlossenen Druckgeräte des Systems in einem Speicher hinterlegt. Zum anderen hat der Druckserver eine ständige oder regelmäßige Verbindung mit den am Drucksystem angeschlossenen Druckern, über die er deren Status überwachen kann, beispielsweise die Anzahl und Länge der am Drucker noch zum Drucken anstehenden Druckdaten (queues) und die Betriebsbereitschaft (on/off) des Druckers.

Obwohl in Figur 1 nur zwei Druckgeräte 4,5 dargestellt sind, kann die Anzahl der angeschlossenen Druckgeräte des Systems im Prinzip beliebig groß sein. Die Druckgeräte 4,5 und der Druckserver 3 müssen auch nicht am selben Ort (Standort) aufgestellt sein, sondern können weltweit jeweils an verschiedenen Orten aufgestellt sein. Ist beispielsweise das Druckgerät 4 ein Gerät, welches monochrom, z. B. in schwarz, druckt und der Drucker 5 ein Vollfarben-Druckgerät, so sendet der Druckserver 3 alle Druckseiten, auf denen nur monochrome Informationen auszugeben sind, an das Druckgerät 4. Druckseiten, welche dagegen mehrfarbig auszudrucken sind, werden an das Druckgerät 5 gesandt. Die Übertragung der Druckdaten erfolgt vom Druckserver 3 an das Druckgerät 4 über die Datenleitung 7 und vom Druckserver 3 an das Druckgerät 5 über die Datenleitung 8. Hierdurch wird eine logische Datenübertragungsebene definiert.

In einer zweiten Datenebene, nämlich der Steuerungsebene ist der Druckserver 3 mit den Druckgeräten 4,5 sowie einem Nachverarbeitungsgerät 6 für das Druckgut steuerungsseitig verbunden. Über diese Steuerungsleitung 9 werden zwischen den angeschlossenen Geräten und dem Druckserver 3 jeweils die Statusinformationen ausgetauscht. Der Druckserver 3 wirkt dadurch als Produktionssteuerungsgerät für alle Seiten, die zu einem Druckjob zusammengehören. Seiten, die in den Druckgeräten 4 bzw. 5 gedruckt werden, werden im Nachverarbeitungsgerät 6, beispielsweise einer Zusammentrag-Einrichtung, gesammelt und weiter verarbeitet. Mit dieser Anordnung ist es beispielsweise möglich, den Druck eines Buches hochgenau zu steuern. Alle Daten kommen am Druckserver 3 an und werden von diesem auf der Druckdatenebene an die beiden stand-alone Druckgeräte 4,5 verteilt. Über die Statusinformationen der Druckgeräte 4,5 und des Nachverarbeitungsgerätes 6 kann der Drucker 3 den Produktionsablauf kontrollieren, d. h. überwachen, ob alle Seiten eines jeweils gedruckten Buches in den Druckgeräten 4,5 ordnungsgemäß gedruckt und im Nachverarbeitungsgerät 6 ordnungsgemäß zusammengetragen sind. Hierzu dient eine optische Barcode-Leseeinrichtung, die den von den Druckgeräten 4,5 ausgehenden Dokumentenstrom 10 seitengenau detektiert. Der Druckserver 3 weist dabei jeder zu druckenden Seite eine individuelle Seiteninformationen (Barcode) zu, welche an geeigneten Stellen der jeweiligen Druckseiten in den Druckgeräten 4,5 gedruckt und von den Barcode-Leseeinrichtungen erfaßt wird. Diese übermitteln die gelesenen Informationen wiederum an den Druckserver, welcher den Produktionsablauf regelt.

Die Druckgeräte sind stand-alone-geräte, welche an sich geeignet sind, direkt an einen Host-Computer oder an ein LAN/WAN angeschlossen zu werden. Sie weisen dazu eine eigene, unabhängige Gerätesteuerung auf und ggf. einen Rasterprozessor, mit dem ein Druckdatenstrom bildpunktweise zur Ansteuerung der jeweiligen Druckeinheit gerastert wird.

Die seitengenaue Erfassung der Dokumente ermöglicht es im Fehlerfall, einen Nachdruck-Vorgang seitengenau neu aufzusetzen und somit einen nur geringen Makulatur-Anteil zu erzeugen. Dies ist insbesondere dann relevant, wenn größere Dokumente wie z.B. Bücher in einem derartigen Produktionssystem gedruckt werden.

Bei dem in Figur 1 dargestellten Ausführungsbeispiel wird davon ausgegangen, daß Druckserver 3 und angeschlossene Geräte 4,5,6 jeweils auf Datensteuerungsebene bzw. Gerätesteuerungsebene eine definierte Kommunikationssprache bzw. ein gemeinsames Protokoll aufweisen. Dies ist insbesondere bei alleinstehenden Geräten wie den Druckern 4,5 häufig nicht der Fall. In Figur 2 ist deshalb zwischen den jeweiligen Geräten 4,5, 15,16 und dem Druckserver 3 ein Hilfscomputer 19, 20, 21, 22 geschaltet, welcher die geräteindividuellen Eigenschaften (Steuerungsbefehle, zu verarbeitende Drucksprachen) auf eine abstrakte bzw. normierte Ebene in den Steuerungsleitungen 17, 18 übersetzt.

Die Leitung 17 wird dabei als Datensteuerungsleitung (Bus) genutzt. Der Druckserver 3 ordnet auf der Druckdatenebene 17 den beiden Druckgeräten 4,5 jeweils gruppenweise, insbesondere seitenweise, die jeweils zu druckenden Daten zu. Die dem Druckgerät 4 zugeordneten Daten werden in dem ihm zugeordneten Hilfscomputer 19 über ein Dateninterface 19a empfangen. Der Hilfscomputer 19 bereitet diese Daten in ein für das Druckgerät 4 geeignetes Datenformat auf. Die Daten können dabei insbesondere durch einen Rasterbildprozessor (Raster Image Processor, RIP) verarbeitet werden, bevor sie dem Druckgerät 4 zugeführt werden. Die Steuerungsdaten werden über das Steuerungsinterface 19b des Hilfscomputers vom Steuerungsbus 18 empfangen. In analoger Weise werden die Daten vom Hilfscomputer 21 des Druckgeräts 5 über die Leitung 8 in dessen Dateninterface 21a gespeist. Die Steuerungsdaten werden vom Hilfscomputer 21 über das Steuerungsinterface 21b empfangen und entsprechend in ein Format umgewandelt, welches das zweite Druckgerät 5 lesen kann. In der Steuerungsleitung 18 bzw. auf der sogenannten Abstraktionsebene (abstraction layer) können alle angeschlossenen Geräte, insbesondere Geräte verschiedener Hersteller, über die ihnen zugeordneten Hilfscomputer (Converter) mit dem Druckserver 3 kommunizieren. Dementsprechend ist auch die Mischeinrichtung (Merger 15) über einen Steuerungscomputer 20 mit dem Steuerungsbus 18 verbunden. Im Merger werden die Seiten, welche in den beiden Druckgeräten 4,5 jeweils unabhängig voneinander gedruckt werden, entsprechend der Job-Reihenfolge gemischt und einem weiteren Nachverarbeitungsgerät, beispielsweise dem Kuvertiergerät 16, zugeführt. Auch dieses Kuvertiergerät 16 hat einen Steuerungscomputer 22, mit dem es Statusinformationen mit dem Druckserver 3 austauschen kann. Auch in diesem Fall ist der Produktionsablauf zwischen allen angeschlossenen Geräten vom Druckserver 3 überwachbar und steuerbar.

Mit der angegebenen System-Struktur ist es insbesondere möglich, vom Druckserver 3 alle angeschlossenen Geräte, ob Druckgerät, Vorverarbeitungsgerät oder Nachverarbeitungsgerät, zentral zu konfigurieren. Der Druckserver dient somit als zentrales Schaltpult zur Einstellung der angeschlossenen Geräte und zur Überwachung und Steuerung des Druckproduktionsablaufes im Gesamtsystem.

Zur Überwachung von Druckaufträgen (jobs) ist im Druckserver 3 vorgesehen, jeweils eine Job-Anfangsseite drucken zu lassen und eine Job-Endseite. Barcode-Leser 25, 26 und 27 an den jeweiligen Geräten 4, 5 und 16 überwachen den Einlauf bzw. Auslauf der Seiten an den Geräten 4, 5, 16 und melden über den Datenbus 18 die Positionen der entsprechenden Seiten. Des weiteren wird vom Druckserver 3 für jede zu druckende Seite ein Barcode vergeben und mit dem Barcode-Leser 25, der den ausgehenden Seitenstrom des Druckers 4 überwacht, sowie dem Barcode-Leser 26, der den ausgehenden Seitenstrom des Druckers 5 überwacht und dem Barcode-Leser 27, der den ausgehenden Seitenstrom des Mergers 15 überwacht, abgeglichen. In einem Störungsfall kann somit vom Druckserver 3 seitengenau der Ort des Fehlers und entsprechende Korrekturmaßnahme festgestellt bzw. eingeleitet werden. Tritt beispielsweise beim Drucken der Seite 23 in Druckgerät 5 ein Fehler auf, so kann der Druckserver 3 gezielt das Nachdrucken bzw. Neuaufsetzen in diesem Druckgerät ansteuern, während alle anderen Seiten, die vorher bzw. nachher im zweiten Druckgerät 4 gedruckt wurden, seitengenau im Merger 15 eingeführt werden. Somit entsteht im Falle einer falsch gedruckten Seite nur geringe Makulatur. Natürlich können statt optischen Barcode-Lesern auch andere Leseeinrichtungen, wie Zeichenerkennungsgeräte (OCR) oder magnetische Barcode-Leser (MICR) verwendet werden.

Mit den in Figuren 1 und 2 dargestellten Systemen läßt sich insbesondere ein standortübergreifendes Produktionssystem für Dokumente angeben. Über Datenfernleitungen, z. B. über Internet, können Formulare von anderen Standorten in den Druckserver 3 eingespeist werden, die dann vor Ort bei entsprechenden Aufrufen von Druck-Jobs gestartet werden.

Durch das Schaffen einer einheitlichen Steuerungsebene (abstraction layer) ist es möglich, n verschiedene Drukker, die jeweils n verschiedene Steuerungen bzw. n verschiedene Datencontroller aufweisen und m verschiedene Technologien (z. B. Farbdruck, schwarz-weiß-Druck, unterschiedliche Auflösungen, elektrofotografische Geräte, Inkjet-Druckgeräte usw.) aufweisen, gemeinsam flexibel in einem Drucksystem zu betreiben (n, m > 1). Dabei können in einem derartigen Drucksystem einzelne Geräte relativ leicht ausgetauscht werden bzw. von einem System in ein anderes System portiert werden. Dies kann auf reiner Datensteuerungsebene geschehen, indem die Druckgeräte eines ersten Drucksystems steuerungsseitig ab einem bestimmten Zeitpunkt einem zweiten Drucksystem zugeordnet werden. Somit entsteht quasi ein Baukastensystem, welches dem Betreiber eines oder mehrerer Druckzentren auch standortübergreifend sehr flexible Gestaltungsmöglichkeiten zur Verarbeitung unterschiedlichster Druckaufträge (Druck-Jobs) ermöglicht. Die Abarbeitung von Druckaufträgen und sogar die Konfiguration verschiedener Drucksysteme können somit im zeitlich geplant werden und somit die Auslastung von Druckzentren weltweit performance-angepaßt optimiert werden.

Die Rasterung kann, statt wie in Figur 2 dargestellt, in Computern erfolgen, die den jeweiligen Druckgeräten zugeordnet sind. Andererseits können solche Rastervorgänge in den einzelnen Druckgeräten und/oder im zentralen Druckserver 3 erfolgen.

### Bezugszeichen

- 1: Drucksystem
- 2: Druckdatenquelle
- 3: Druckserver
- 4: erster Drucker (monochrom)
- 5: zweiter Drucker (multicolor)
- 6: Nachverarbeitungsgerät
- 7: monochrom - Datenleitung
- 8: Farb-Datenleitung
- 9: Steuerungsleitung
- 10: Dokumentenfluß
- 11: Dateneingang
- 12: Steuerungseingang

- 15: Merger
- 16: Kuvertiergerät
- 17: Datenebene
- 18: Steuerungbus
- 19: Hilfscomputer s/w
- 19a: Dateninterface
- 19b: Steuerungsinterface
- 20: Steuerungscomputer
- 21: Hilfscomputer (Farbe)
- 21a: Dateninterface
- 21b: Steuerungsinterface
- 22: Steuerungscomputer

- 25: erster Barcode-Leser
- 26: zweiter Barcode-Leser
- 27: dritter Barcode-Leser

## Patentansprüche

1. Drucksystem mit n > 1 unterschiedlichen stand-alone-Druckgeräten (4, 5) unterschiedlicher Bauart und mit mindestens einem Druckserver (3), der Druckdaten von mindestens einer Druckdatenquelle empfängt und wahlweise an die stand-alone-Druckgeräte (4, 5) verteilt, wobei
(a) die Druckdaten eines Druckauftrages vom Druckserver (3) in Datengruppen (queues) unterteilt werden,
(b) die Daten einer Datengruppe (queue) gruppenspezifisch zu einem der Gruppe zugeordneten stand-alone-Druckgerät (4, 5) übertragen werden,
(c) Statusinformationen der stand-alone-Druckgeräte (4, 5) zur geräteübergreifenden Prozessteuerung des Druckauftrages ausgewertet werden, und
(d) die Auswertung der Statusinformationen im Druckserver (3) erfolgt.

2. Drucksystem nach Anspruch 1, wobei der Druckserver (3) mit einer Druckdatenleitung (8) und mit einer Steuerungsleitung (9) verbunden ist.

3. Drucksystem nach Anspruch 1 oder 2, wobei mindestens einem stand-alone-Druckgerät (4, 5) ein Hilfscomputer (20, 22) zugeordnet ist, der die Druckdaten vom Druckserver (3) empfängt und in ein dem Druckgerät (4, 5) angepaßtes Druckdatenformat umwandelt.

4. Drucksystem nach einem der vorhergehenden Ansprüche, wobei der Hilfscomputer (20, 22) ein stand-alone-Computer ist.

5. Drucksystem nach Anspruch 3 oder 4, wobei das erzeugte Druckgut seitenweise erfaßt wird und damit der Produktionsablauf eines Druckauftrags seitengenau überwacht wird.

6. Drucksystem nach einem der vorhergehenden Ansprüche, wobei im Druckserver (3) die Druckdaten aller Datengruppen in einem universellen Datenformat verarbeitet werden, das für alle angeschlossenen Hilfscomputer (20, 22) lesbar ist.

7. Drucksystem nach einem der vorhergehenden Ansprüche, wobei im Druckerserver (3) eine Steuerungs-Oberfläche vorgesehen ist, mit der die an den Druckserver (3) angeschlossenen stand-alone-Druckgeräte (4, 5) und/oder deren Hilfscomputer (20, 22) zentral konfigurierbar sind.

8. Drucksystem nach einem der vorhergehenden Ansprüche, wobei in einem ersten stand-alone-Druckgerät (4) Informationen mit höchstens zwei Farben ausgebbar sind und in einem zweiten stand-alone-Druckgerät (5) Informationen in Vollfarben.

9. Drucksystem nach einem der vorhergehenden Ansprüche, wobei die Druckdaten im Druckserver (3) gerastert werden und als gerasterte Bilder an die stand-alone-Druckgeräte (4, 5) oder an deren zugeordnete Hilfscomputer (20, 22) übertragen werden.

10. Drucksystem nach einem der vorhergehenden Ansprüche, wobei die stand-alone-Druckgeräte (4, 5) und/oder der Druckserver (3) jeweils an verschiedenen Standorten aufgestellt sind und über ein Datenfernnetz (18) miteinander verbunden sind.

11. Drucksystem nach einem der vorhergehenden Ansprüche, wobei am Druckserver (3) Formulare hinterlegt sind, die mit variablen Daten, welche über einen Dateneingang des Druckservers (3) eingespeist werden, zu einem Druckdokument verbindbar sind.

12. Drucksystem nach Anspruch 11, wobei die Formulardaten von einem Anwender-Computer, der über ein Datenfernnetz mit dem Druckserver (3) verbunden ist, im Druckserver (3) hinterlegbar sind.

13. Drucksystem nach einem der vorhergehenden Ansprüche, wobei mindestens ein Zusatzgerät (15, 16), das Druckgut aus den stand-alone-Druckgeräten (4, 5)weiterverarbeitet, auf einer Steuerungsebene mit dem Druckserver (3) und/oder mit den stand-alone-Druckgeräten (4, 5) verbunden ist.

14. Drucksystem nach einem der vorhergehenden Ansprüche, wobei mindestens ein Zusatzgerät (15, 16), welches Druckgut, das den stand-alone-Druckgeräten (4, 5)zugeführt wird, weiterverarbeitet, auf einer Steuerungsebene mit dem Druckserver (3) und/oder mit den stand-alone-Druckgeräten (4, 5) verbunden ist.

15. Drucksystem nach einem der beiden Ansprüche 13 oder 14, wobei der Druckserver (3) alle am Produktionsablauf eines Druckauftrages beteiligten Geräte (4, 5, 15, 16) bis zur Fertigstellung des Auftrags-Endprodukts, insbesondere eines gebundenen Buches, durch Auswertung von Statusinformationen überwacht und die Geräte (4, 5, 15, 16) ansteuert.

16. Drucksystem nach Anspruch 15, wobei die Statusinformationen von den mit dem Druckserver (3) verbundenen Zusatzgeräten, insbesondere Druck, - Vor,- oder Nachverarbeitungsgeräten (4, 5, 15, 16) und/oder von ihnen zugeordneten Uberwachungsgeräten (25, 26, 27), abgegeben werden.

17. Drucksystem nach einem der vorhergehenden Ansprüche, wobei der Druckserver (3) eine Datenbank aufweist, in der produktionsrelevante und/oder gerätespezifische Daten der angeschlossenen Geräte (4, 5, 15, 16) abgespeichert sind.

18. Drucksystem nach einem der vorhergehenden Ansprüche, wobei der Druckserver (3) ein Expertensystem aufweist, mit dem produktionsrelevante und/oder gerätespezifische Statusinformationen derart selbstlernend verarbeitbar sind, daß sich das Expertensystem hinsichtlich eines effizienten Druckproduktionsablaufs mit fortschreitender Druckbetriebsdauer selbst optimiert.

19. Drucksystem nach einem der vorhergehenden Ansprüche, wobei der Druckserver (3) mit seinen verbundenen Geräten (4, 5, 15, 16) in einer geräteunabhängigen Steuerungssprache kommuniziert.

## Claims

1. Printing system with n > 1 different standalone printer devices (4, 5) of different structure and with at least one print server (3), which receives print data from at least one print data source and which optionally distributes them to the standalone printer devices (4, 5), wherein
(a) the print server (3) subdivides the print data of a print job into data groups (queues),
(b) the data of a data group (queue) are group-specifically transmitted to a standalone printer device (4, 5) that is allocated to the group,
(c) pieces of status information of the standalone printer devices (4, 5) are evaluated for the multi-device process control of the print job, and
(d) the pieces of status information are evaluated in the print server (3).

2. Printing system according to claim 1, wherein the print server (3) is connected to a print data line (8) and a control line (9).

3. Printing system according to claim 1 or 2, wherein an auxiliary computer (20, 22) is allocated to at least one standalone printer device (4, 5), which auxiliary computer receives the print data from the print server (3) and converts them into a print data format which is adapted to the printer device (4, 5).

4. Printing system according to one of the preceding claims, wherein the auxiliary computer (20, 22) is a standalone computer.

5. Printing system according to claim 3 or 4, wherein the generated print product is acquired page by page and thus the production process of a print job is page-precisely monitored.

6. Printing system according to one of the preceding claims, wherein the print data of all data groups are processed in the print server (3) in a universal data format, which can be read by all connected auxiliary computers (20, 22).

7. Printing system according to one of the preceding claims, wherein a control surface is provided in the print server (3) with which the standalone printer devices (4, 5) connected to the print server (3) and/or their auxiliary computers (20, 22) can be centrally configured.

8. Printing system according to one of the preceding claims, wherein in a first standalone printer device (4) pieces of information with two colours at a maximum can be output and in a second standalone printer device (5) pieces of information in full colours can be output.

9. Printing system according to one of the preceding claims, wherein the print data are rastered in the print server (3) and are transmitted as rastered images to the standalone printer devices (4, 5) or to their allocated auxiliary computers (20, 22).

10. Printing system according to one of the preceding claims, wherein the standalone printer devices (4, 5) and/or the print server (3) are respectively set up at different locations and are connected to one another via a data long-distance network (18).

11. Printing system according to one of the preceding claims, wherein forms are deposited at the print server (3), which forms can be combined with variable data to a print document, the variable data being fed via a data input of the print server (3).

12. Printing system according to claim 11, wherein the form data can be deposited in the print server (3) by a user computer which is connected to the print server (3) via a data long-distance network.

13. Printing system according to one of the preceding claims, wherein at least one additional device (15, 16) which further processes the print product from the standalone printer devices (4, 5) is connected to the print server (3) and/or to the standalone printer devices (4, 5) on one control level therewith.

14. Printing system according to one of the preceding claims, wherein at least one additional device (15, 16) which further processes the print product that is supplied to the standalone printer devices (4, 5) is connected to the print server (3) and/or to the standalone printer devices (4, 5) on one control level therewith.

15. Printing system according to one of the claims 13 or 14, wherein the print server (3) monitors all devices (4, 5, 15, 16) involved in the production process of a print job until the job end product is completed, particularly a bound book, by evaluating pieces of status information and drives the devices (4, 5, 15, 16).

16. Printing system according to claim 15, wherein the pieces of status information are output by the additional devices, particularly printing devices, preprocessing devices or postprocessing devices (4, 5, 15, 16) that are connected to the print server (3) and/or are output by monitoring devices (25, 26, 27) allocated to these.

17. Printing system according to one of the preceding claims, wherein the print server (3) has a data bank in which production-relevant and/or device-specific data of the connected devices (4, 5, 15, 16) are stored.

18. Printing system according to one of the preceding claims, wherein the print server (3) has an expert system with which production-relevant and/or device-specific pieces of status information can be processed in a self-learning fashion such that the expert system optimises itself with regard to an efficient print production process with progressing print operating time.

19. Printing system according to one of the preceding claims, wherein the print server (3) communicates with its connected devices (4, 5, 15, 16) in a device-independent control language.

## Revendications

1. Système d'impression comportant n>1 appareils d'impression autonomes différents (4, 5) ayant des modes de fonctionnement différents et comportant au moins un serveur d'impression (3) qui reçoit des données d'impression d'au moins une source de données d'impression et les répartit au choix vers les appareils d'impression autonomes (4, 5), dans lequel :
(a) les données d'impression d'une tâche d'impression sont réparties par le serveur d'impression (3) en groupes de données (files d'attente),
(b) les données d'un groupe de données (file d'attente) sont transmises de façon groupée à un appareil d'impression autonome (4, 5) associé à un groupe,
(c) des informations d'état des appareils d'impression autonomes (4, 5) sont exploitées en vue de commander le processus de la tâche d'impression exécutée par les appareils, et
(d) l'exploitation des informations d'état est effectuée dans le serveur d'impression (3).

2. Système d'impression selon la revendication 1, dans lequel le serveur d'impression (3) est relié à un bus de données d'impression (8) et à un bus de commande (9).

3. Système d'impression selon la revendication 1 ou 2, dans lequel un ordinateur auxiliaire (20, 22) est associé à au moins un appareil d'impression autonome (4, 5), lequel ordinateur auxiliaire reçoit les données d'impression du serveur d'impression (3) et les met à un format de données d'impression adapté à l'appareil d'impression (4, 5).

4. Système d'impression selon l'une quelconque des revendications précédentes, dans lequel l'ordinateur auxiliaire (20, 22) est un ordinateur autonome.

5. Système d'impression selon la revendication 3 ou 4, dans lequel le produit d'impression généré est défini feuille à feuille, et par conséquent le déroulement d'une tâche d'impression est surveillé feuille à feuille avec précision.

6. Système d'impression selon l'une quelconque des revendications précédentes, dans lequel les données d'impression de tous les groupes d'impression sont traitées dans le serveur d'impression (3) dans un format de données universel qui peut être lu par tous les ordinateurs auxiliaires (20, 22) qui sont raccordés.

7. Système d'impression selon l'une des revendications précédentes, dans lequel il est prévu une surface de commande dans le serveur d'impression (3) au moyen de laquelle l'appareil d'impression (4, 5) autonome raccordé au serveur d'impression (3) et/ou son ordinateur auxiliaire (20, 22) peuvent être configurés de façon centralisée.

8. Système d'impression selon l'une des revendications précédentes, dans lequel des informations peuvent être délivrées en deux couleurs tout au plus dans un premier appareil d'impression autonome (4), et des informations peuvent être délivrées en couleurs pures dans un second appareil d'impression autonome (5).

9. Système d'impression selon l'une des revendications précédentes, dans lequel les données d'impression sont tramées dans le serveur d'impression (3) et sont transmises aux appareils d'impression autonomes (4, 5) ou à leur ordinateur associé (20, 22) sous forme d'images tramées.

10. Système d'impression selon l'une des revendications précédentes, dans lequel les appareils d'impression autonomes (4, 5) et/ou le serveur d'impression (3) sont montés à des endroits différents et sont reliés entre eux par un réseau de transmission de données (18).

11. Système d'impression selon l'une des revendications précédentes, dans lequel des formulaires sont déposées au niveau du serveur d'impression (3), lesquels formulaires peuvent être reliés à un document d'impression avec des données variables qui sont entrées au niveau d'une entrée de données du serveur d'impression (3).

12. Système d'impression selon la revendication 11, dans lequel les données de formulaires peuvent être stockées dans le serveur d'impression (3) par un terminal qui est relié au serveur d'impression (3) par un réseau de transmission de données.

13. Système d'impression selon l'une des revendications précédentes, dans lequel au moins un appareil supplémentaire (15, 16), qui réalise un post-traitement du produit d'impression délivré par les appareils d'impression autonomes (4, 5), est relié du point de vue des commandes au serveur d'impression (3) et/ou aux appareils d'impression autonomes (4, 5).

14. Système d'impression selon l'une des revendications précédentes, dans lequel au moins un appareil supplémentaire (15, 16), qui réalise un post-traitement du produit d'impression qui est amené aux appareils d'impression autonomes (4, 5), est relié du point de vue des commandes au serveur d'impression (3) et/ou aux appareils d'impression autonomes (4, 5).

15. Système d'impression selon l'une des deux revendications 13 ou 14, dans lequel le serveur d'impression (3) surveille tous les appareils (4, 5, 15, 16) impliqués dans le déroulement d'une tâche d'impression jusqu'à la réalisation finale d'un livre relié en exploitant des informations d'état, et commande les appareils (4, 5, 15, 16).

16. Système d'impression selon la revendication 15, dans lequel les informations d'état sont délivrées par les appareil supplémentaires, reliés au serveur d'impression (3), en particulier les appareils d'impression, de prétraitement ou de post-traitement (4, 5, 15, 16) et/ou aux appareils de surveillance (25, 26, 27) qui leur sont associés.

17. Système d'impression selon l'une des revendications précédentes, dans lequel le serveur d'impression (3) comporte une banque de données dans laquelle sont mémorisées des données relatives à la production et aux caractéristiques des appareils raccordés (4, 5, 15, 16).

18. Système d'impression selon l'une des revendications précédentes, dans lequel le serveur d'impression (3) comporte un système expert au moyen duquel des informations d'état relatives à la production et aux caractéristiques des appareils peuvent être traitées par auto-apprentissage, de sorte que le système expert s'auto-optimise quant au déroulement efficace de l'impression à mesure que le mode d'impression progresse dans le temps.

19. Système d'impression selon l'une des revendications précédentes, dans lequel le serveur d'impression (3) communique avec les appareils (4, 5, 15, 16) auxquels il est relié dans un langage de commande qui est indépendant des appareils.
